# EUROPÄISCHE PATENTSCHRIFT

(11) **EP 2 892 323 B1**
(45) Veröffentlichungstag und Bekanntmachung des Hinweises auf die Patenterteilung: **18.01.2017**
(21) Anmeldenummer: 13756884.6
(22) Anmeldetag: 02.09.2013
(51) Int. Cl.: A01J 5/013, A01J 5/04, A01J 9/08

(54) **VORRICHTUNG ZUR AUFNAHME SEPARIERTER MILCH**
DEVICE FOR COLLECTING MILK SAMPLES
DISPOSITIF D'ECHANTILLONAGE DE LAIT

(30) Priorität: 04.09.2012 DE 102012108190
(43) Veröffentlichungstag der Anmeldung: 15.07.2015
(73) Patentinhaber: GEA Farm Technologies GmbH, 59199 Bönen (DE); Gea Farm Technologies Nederland B.V., 3893 GE Zeewolde (NL)
(72) Erfinder: FLIKWEERT, Jan, Kees, NL-3862 MD Nijkerk (NL); SLOOTWEG, Marinus, Cornelis, NL-3862 ZG Nijkerk (NL)
(74) Vertreter: Neumann, Ditmar
(86) Internationale Anmeldenummer: PCT/EP2013/068071
(87) Internationale Veröffentlichungsnummer: WO 2014/037298

(56) Entgegenhaltungen:
- WO-A1-01/74149
- WO-A2-2009/123435
- DE-A1- 3 539 166
- DE-U1- 9 320 532

## Beschreibung

Der Gegenstand der Erfindung bezieht sich auf eine Vorrichtung zur Aufnahme separierter Milch sowie auf eine Melkvorrichtungen zum Melken eines Tiers mit einer Vorrichtung zur Aufnahme separierter Milch. Rohmilch ist ein wichtiges Lebensmittel und ein bedeutsamer Rohstoff für die Nahrungsmittelindustrie. Zum Schutz des Verbrauchers, zur technischen Verarbeitungsfähigkeit sowie zur Marktlenkung muss Rohmilch sowohl nationalen als auch internationalen Qualitätsanforderungen genügen. Grundsätzlich wird die Rohmilch in verwertbare Milch und nicht verwertbare Milch unterteilt. Die verwertbare Milch kann bspw. zur Herstellung von Molkereiprodukten verwendet werden. Die nicht verwertbare Milch ist für den menschlichen Verzehr nicht geeignet oder nicht zugelassen. Zur nicht verwertbaren Milch zählt bspw. Milch, die anomale sensorische Merkmale aufweist. Zur Prüfung der Milch werden bspw. die ersten Milchstrahlen aus jeder Zitze gesondert abgemolken. Es erfolgt eine Prüfung des Aussehens der Milch. Tiere, von denen Milch als Lebensmittel gewonnen wird, dürfen nicht an einer erkennbaren Entzündung des Euters leiden. Anzeichen einer erkennbaren Entzündung des Euters (klinische Mastitis) sind unter anderem das Vorhandensein von Flocken, bestehend aus Geweberesten, Fibrin, Blutcoaguala und Mastitiserregern im Gemelk einzelner Drüsenkomplexe, Euterviertel bzw. Euterhälften und dem gesamten Gemelk einzelner Tiere.

Wird ein Tier medikamentös behandelt, so darf die Milch des Tiers während der medikamentösen Behandlung und innerhalb einer vorgegebenen Zeitspanne nach dem Ende der medikamentösen Behandlung nicht als verkehrsfähige Milch klassifiziert werden.

Biestmilch von frisch gekalbten Kühen wird in einigen Ländern als nicht verkehrsfähig angesehen, wenn der zeitliche Abstand zwischen der Kalbung und einer vorgegebenen Zeitspanne zu gering ist.

Es ist bekannt, dass z. B. bei automatischen Melksystemen, wie z. B. roboterunterstützten Melksystemen und auch bei automatisierten oder automatisierten Melkanlagen eine Separierung des nicht verkehrsfähigen Gemelks erfolgt. Hierzu wird das Gemelk in einem Behälter aufgefangen oder unmittelbar verworfen.

Die Aufzucht neu geborener Kälber erfolgt idealerweise mit der Milch ihrer Mütter, da diese Milch kurz nach der Kalbung besonders viele Immunoglobuline enthält, welche den Aufbau des Immunsystems des Kalbs unterstützen. Es ist daher vorteilhaft, wenn diese Milch dem Kalb zugeführt wird.

Vorrichtungen zur Aufnahme separierter Milch sind bekannt. So ist bspw. eine Vorrichtung zur Aufnahme separierter Milch bekannt, die ein Gestell aufweist. In dem Gestell sind Behälter, bspw. Eimer, angeordnet. Oberhalb der Eimer ist eine Leitung vorgesehen, die Auslässe aufweist. Durch einen Auslass kann Milch in einen entsprechenden Behälter fließen. Die Auslässe sind über Ventile schließbar und öffnenbar. Zur Reinigung der Leitung ist an einem Ende der Leitung ein Ventil vorgesehen, während eines Reinigungszyklus geöffnet wird.

Eine weitere bekannte Vorrichtung zur Aufnahme separierter Milch weist ein Gestell auf. Es sind drei Behälter vorgesehen. Die Mündung bzw. der Auslass einer flexiblen Leitung ist über einem entsprechenden Behälter positionierbar. Zur Positionierung des Auslasses der Leitung sind zwei Zylinder-Kolbeneinheiten vorgesehen, mittels derer der Auslass der Leitung über der Öffnung eines entsprechenden Behälters positioniert werden kann.

Weiterhin ist aus WO01/74149 A1 eine Vorrichtung zur Aufnahme separierter Milch bekannt, umfassend ein Gestell, wenigstens zwei Behälter,eine wenigstens abschnittsweise flexible Leitung,einen beweglichen Schlitten, der mit der Leitung verbunden ist und eine Antriebseinrichtung mittels derer der Schlitten bewegbar und so zu einem Behälter positionierbar ist, dass Milch in den Behälter fließen kann, wobei eine Führungseinheit entlang derer der Schlitten geführt wird.

Hiervon ausgehend liegt der vorliegenden Erfindung die Zielsetzung zugrunde, eine Vorrichtung zur Aufnahme separierbarer Milch anzugeben, welche konstruktiv einfach gestaltet und leicht erweiterbar ist.

Diese Aufgaben wird erfindungsgemäß durch eine Vorrichtung zur Aufnahme separierter Milch mit den Merkmalen des Patentanspruchs 1 erreicht. Die abhängigen Patentansprüche sind auf vorteilhafte Weiterbildungen gerichtet.

Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden. Die erfindungsgemäße Vorrichtung zur Aufnahme separierter Milch umfasst ein Gestell. Das Gestell kann eine Tragkonstruktion sein, die bspw. auf dem Boden oder an einer Wand befestigt wird. Die Vorrichtung weist wenigstens zwei Behälter zur Aufnahme separierter Milch auf. Separierte Milch wird über eine wenigstens abschnittsweise flexibel ausgebildete Leitung zugeführt. Die Vorrichtung weist einen beweglichen Schlitten auf, der mit der Leitung verbunden ist. Der bewegliche Schlitten wird mittels einer Antriebseinrichtung bewegt. Die Antriebseinrichtung ermöglicht eine Positionierung des Schlittens, so dass Milch in einem Behälter fließen kann. Der Schlitten ist entlang einer Führungseinheit geführt. Die Antriebseinrichtung weist eine Antriebseinheit auf, die mit einer Stange verbunden ist. Die Stange ist mittels der Antriebseinheit zwischen zwei Endpositionen bewegbar. Die Stange ist mit dem Schlitten lösbar verbunden. Mittels der Stange kann der Schlitten über einen entsprechenden Behälter positioniert werden.

Die erfindungsgemäße Ausgestaltung der Vorrichtung zur Aufnahme separierter Milch ist konstruktiv einfach ausgebildet. Sie ermöglicht auch eine unkomplizierte Erweiterung der Vorrichtung um weitere Module, so dass eine Anpassung der Vorrichtung an die Melkanlage bzw. an den Viehbestand relativ einfach und kostengünstig erreicht werden kann.

Gemäß einer vorteilhaften Ausgestaltung der Vorrichtung wird vorgeschlagen, dass ein Modul umfassend ein Modulgestell, wenigstens einen Behälter und eine Modul-Führungseinheit vorgesehen ist. Ein Endabschnitt der Modul-Führungseinheit ist mit einem Endabschnitt der Führungseinheit verbindbar. Die Verbindung kann form- und/oder kraftschlüssig erfolgen. Durch diese Maßnahme kann eine Erweiterung der Vorrichtung mit einfachen Mitteln erzielt werden. Der bewegliche Schlitten ist dann über die Führungseinheit hinaus in der Modul-Führungseinheit geführt. Ist ein Modul vorgesehen, so wird vorzugsweise die flexible Leitung entsprechend verlängert, so dass der Schlitten auch die Behälter im letzten Modul erreichen kann.

Nach einer noch weiteren vorteilhaften Ausgestaltung der Vorrichtung wird vorgeschlagen, dass die Modul- Führungseinheit mit einer Modul- Führungseinheit eines weiteren Moduls verbindbar ist. Hierdurch wird die Möglichkeit geschaffen, eine Mehrzahl von Modul- Führungseinheiten und eine entsprechende Anzahl von Behältern bereitzustellen, um eine Anpassung an die Gegebenheiten im Milchviehbetrieb zu erreichen. Die Vorrichtung zur Aufnahme der separierten Milch ermöglicht somit eine Erweiterung, die an das Wachstum bspw. der Herde eine Milchviehbetriebs anpassbar ist Die Anordnung der Vorrichtung zur Aufnahme separierter Milch kann unabhängig vom Standort einer Melkeinrichtung eines Melksystems erfolgen. Es kann bspw. in einem gesonderten Raum sein, der einen relativ hohen hygienischen Standard aufweist, so dass die separierte Milch zur Kälberfütterung verwendet werden kann.

Zur Vereinfachung der Montage bzw. der Verbindung zwischen der Führungseinheit und der Modul- Führungseinheit bzw. zweier Modul- Führungseinheiten wird nach einer weiteren vorteilhaften Ausgestaltung der Vorrichtung vorgeschlagen, dass der Abschnitt der Modul- Führungseinheit in einen Endabschnitt einer Modul-Führungseinheit eines weiteren Moduls einsteckbar ist. Es besteht auch die Möglichkeit, dass der Endabschnitt einer Modul-Führungseinheit in einen Endabschnitt der Führungseinheit einsteckbar ist. Es versteht sich, dass die Abschnitte auch umgekehrt ausgebildet sein können, so dass bspw. der Endabschnitt einer Führungseinheit in den Endabschnitt einer Modul-Führungseinheit eingesteckt werden kann.

Besonders bevorzugt ist eine Ausgestaltung der Vorrichtung, bei der die Führungseinheit und ggf. die Modul-Führungseinheit durch zwei beabstandet zueinander parallel angeordnete Führungsschienen gebildet ist. Der Schlitten ist gleitend zwischen den Führungsschienen geführt. Der Schlitten als solcher kann bspw. aus einem Kunststoff hergestellt sein. Der Schlitten kann auch bspw. Rollen oder dergleichen aufweisen, so dass die Reibungsverluste während der Bewegung des Schlittens zwischen den Führungsschienen relativ gering ist.

Bevorzugt ist eine Ausgestaltung der Vorrichtung, bei der der Schlitten mit wenigstens einer Führungsschiene formschlüssig verbunden ist. Die formschlüssige Verbindung kann bspw. durch eine Nut-Feder-Kombination erreicht werden. Der Schlitten kann bspw. in den Seitenflächen eine V-förmige Nut aufweisen, die in eine entsprechend ausgebildete Führungsschiene wenigstens teilweise eingreift. Ist der Schlitten mit V-förmigen Nuten ausgebildet, so kann die Führungsschiene bspw. einen rechteckförmigen Querschnitt, vorzugsweise quadratischen Querschnitt, aufweisen. Es kann daher bspw. bei den Führungsschienen auf Standardhalbzeuge zurückgegriffen werden, so dass die Herstellungskosten der Vorrichtung reduziert werden können.

Bevorzugt ist dabei eine Ausgestaltung der Antriebseinheit in Form einer Zylinder-Kolben-Einheit. Hierbei kann es sich um eine pneumatisch betätigbare Zylinder-Kolben-Einheit handeln. Alternativ kann die Antriebseinheit durch einen Elektromotor gebildet sein, der ein Zahnrad antreibt, welches in eine an der Stange vorgesehene Verzahnung eingreift. Die Rotationsbewegung des Zahnrads führt über die Verzahnung in eine translatorische Bewegung der Stange.

Alternativ kann die Antriebseinheit auch so ausgebildet sein, dass ein Elektromotor vorgesehen ist, der mit der Stange über einen Riementrieb verbunden ist.

Um den Steuerungsaufwand insbesondere um einfache Antriebseinheiten verwenden zu können, wir vorgeschlagen, dass in den jeweiligen Endpositionen Schalter vorgesehen sind, mittels derer die Antriebseinheit schaltbar ist. Ist die Antriebseinheit, insbesondere der Elektromotor, ein geschaltet, so wird die Stange mittelbar oder unmittelbar in die eine oder in die andere Endposition verfahren. Erreicht die Stange ihre Endposition, so wird der Schalter betätigt und der Antrieb ausgeschaltet.

Die Behälter können aus der Vorrichtung entnommen werden. Die sich in einem Behälter befindende Milch kann bspw. an ein Kalb verfüttert werden, wenn es sich hierbei um die Milch eines Muttertiers handelt. Um sicherzustellen, dass durch menschliches Versagen kein Behälter in der Vorrichtung bereitgestellt wird, wir vorgeschlagen, dass ein Sensor einem Behälter zugeordnet ist, der ein Signal liefert, ob der Behälter vorhanden oder entnommen ist. Dadurch wird sichergestellt, dass Milch nicht in die Umgebung strömen wird.

Besonders bevorzugt ist dabei eine Ausgestaltung, bei der der Sensor das Gewicht des Behälters misst. Zum einen kann der Sensor das Vorhandensein des Behälters signalisieren. Wird der Sensor auch zur Messung des Gewichts des Behälters verwendet, so kann auch eine Entscheidung darüber getroffen werden, ob der Behälter voll ist oder nicht. Ist der Behälter voll, liefert der Sensor ein entsprechendes Signal an eine Steuerung. Mittels der Steuerung kann die Antriebseinheit angesteuert werden. Mittels der Antriebseinheit wird der Schlitten mit dem Auslass der Leitung über einen anderen Behälter verfahren, so dass ein Überfüllen des Behälters vermieden wird.

Nach einer noch weiteren bevorzugten Ausgestaltung der Vorrichtung wird vorgeschlagen, dass der Schlitten eine Verriegelungseinheit aufweist, so dass der Schlitten temporär mit der Stange verbindbar ist. Die Verriegelungseinheit ist vorzugsweise pneumatisch oder elektromagnetisch betätigbar. Insbesondere wird vorgeschlagen, dass die Verriegelungseinheit eine verschwenkbare Klaue aufweist, welche mit einem Element an der Stange eine Wirkverbindung eingehen kann.

Nach einem weiteren erfinderischen Gedanken wird eine Vorrichtung zur Aufnahme separierter Milch umfassend ein Gestell und wenigstens zwei Behälter, die zu Aufnahme der Milch bestimmt und geeignet sind, insbesondere nach einem der Ansprüche 1 bis 15, vorgeschlagen, wobei ein verschwenkbarer Leitungsabschnitt vorgesehen ist, der mit einer Zuleitung verbunden und der Auslass des Leitungsabschnittes in einer ersten Position zu einem Auffangbehälter gerichtet und in einer zweiten Position mit dem Zulauf der Leitung verbindbar ist.

Den wenigstens zwei Behältern ist ein Auffangbehälter vorgeschaltet. Der Auffangbehälter kann bspw. dazu verwendet werden sinnfällig veränderte Milch aufzufangen, so dass in die Behälter lediglich Milch von Mutterkühen gelangen kann, die zur Kälberfütterung verwendbar ist. Der Auffangbehälter kann bspw. auch dazu dienen, Milch von Mutterkühlen aufzufangen, die zur Aufzucht von Bullen dient.

Um zu erreichen, dass die Milch in den Auffangbehälter oder in einen der Behälter gelangt, wird vorgeschlagen, dass ein verschwenkbarer Leitungsabschnitt vorgesehen ist, der mit der Zuleitung verbunden und der Auslass des Leitungsabschnitts an einer ersten Position auf den Auffangbehälter hin gerichtet ist. An der zweiten Position ist der Auslass des Leitungsabschnitt mit dem Zulauf der Leitung verbindbar, über die die Milch in die Behälter gelangen kann.

Der Leitungsabschnitt kann mittels einer Zylinder-Kolben-Einheit verschwenkt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: perspektivisch eine Vorrichtung zur Aufnahme separierter Milch,
- Fig. 2:: eine Vorderansicht der Vorrichtung nach Fig. 1,
- Fig. 3:: eine Schnittansicht entlang der Schnittlinie A-A nach Fig. 2,
- Fig. 4:: eine Schnittansicht entlang der Schnittlinie B-B nach Fig. 3,
- Fig. 5:: die Vorrichtung nach Fig. 1 mit abgenommener Deckplatte,
- Fig. 6:: die Vorrichtung nach Fig. 1 mit einem Modul,
- Fig. 7:: die Vorrichtung nach Fig. 1 mit drei Modulen,
- Fig. 8:: eine perspektivische Ansicht eines Schlittens mit einer Verrieglungseinheit,
- Fig. 9:: eine Klaue in Wirkverbindung mit einer Stange,
- Fig. 10:: schematisch eine Vorrichtung nach Fig. 1 mit einem Auffangbehälter,
- Fig. 11:: schematisch in einer Vorderansicht eine Führungseinheit mit einem Schlitten und
- Fig. 12: ein weiteres Ausführungsbeispiel einer Vorrichtung zur Aufnahme separierter Milch in einer perspektiven Ansicht.

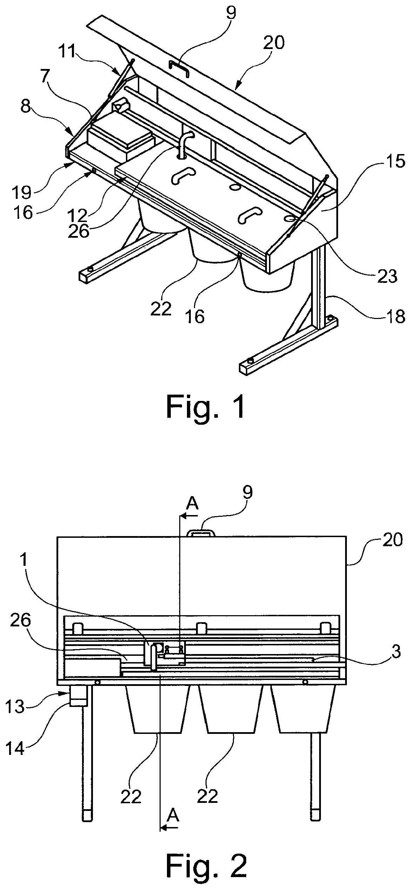

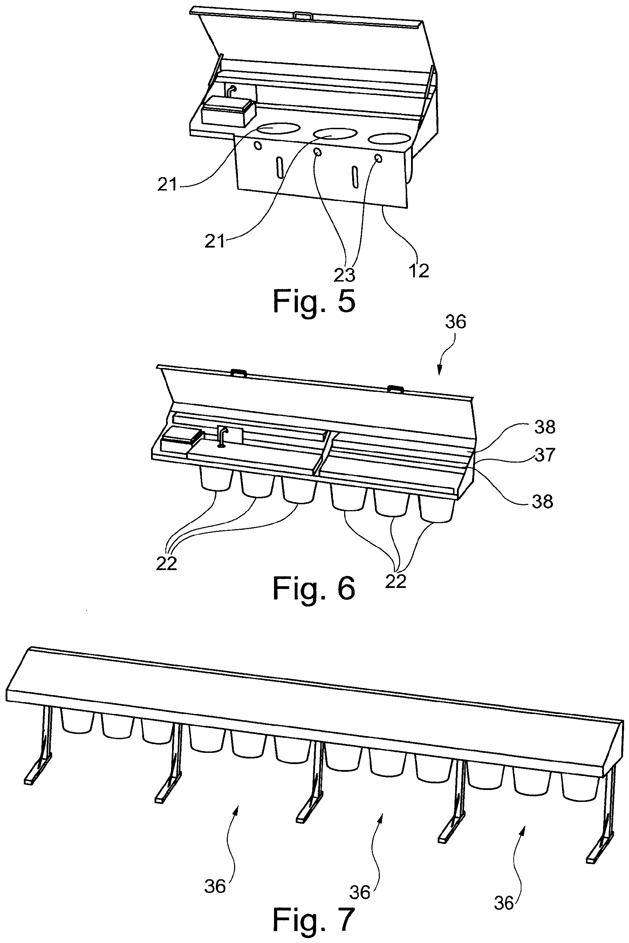

In Fig. 1 ist eine bevorzugte Ausführungsform einer Vorrichtung zur Aufnahme separierter Milch in einer perspektivischen Ansicht dargestellt. Die Vorrichtung umfasst ein Gestell 18. Das Gestell 18 weist eine Grundplatte 19 auf, die mit dem Gestell 18 mittels Schrauben 16 verschraubt ist. In der Grundplatte 19 sind Öffnungen 21 (vgl. Fig. 5) vorgesehen, durch die sich teilweise Behälter 22 hindurch erstecken. In dem dargestellten Ausführungsbeispiel handelt es sich bei den Behältern 22 um Eimer, die im Öffnungsbereich einen Rand aufweisen, der auf der Grundplatte 19 aufliegt. Die Behälter 22 bzw. deren Öffnungen sind durch eine Abdeckplatte 12 abgedeckt. Die Abdeckplatte 12 weist Griffe auf, mittels derer die Abdeckplatte 12 von der Grundplatte 19 entnehmbar ist. Die Grundplatte 19 kann bspw. Schlitze aufweisen, in die entsprechende Nasen, die an der Abdeckplatte 12 ausgebildet sind, eingreifen, so dass die Abdeckplatte 12 an der Grundplatte 19 positioniert werden kann , wie dies in Fig. 5 dargestellt ist. Ist die Abdeckplatte 12 entnommen worden, so kann ein Melker wenigstens einen Behälter 22 entnehmen und durch einen anderen Behälter ersetzen, wie dies nachstehend ausgeführt ist.

Die Abdeckplatte 12 weist Durchlässe 23 auf. Die Durchlässe 23 sind so ausgebildet, dass Milch in Behälter 22 fließen kann.

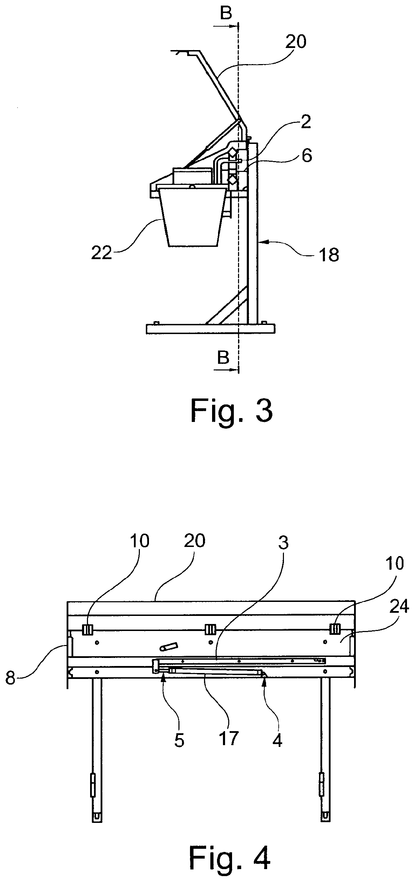

Mit dem Gestell 18 sind Seitenwände 8, 15 verbunden. Die Seitenwand 15 ist mit dem Gestell 18 lösbar verbunden. Aus den Fig. 1 und 3 ist ersichtlich, dass die Vorrichtung eine Haube 20 aufweist. Die Haube 20 ist um eine Längsachse verschwenkbar. Hierzu ist die Haube 20 mittels Scharnieren 10 an einer Rückwand 24 festgelegt. Fig. 1 zeigt die Haube 20 im verschwenkten Zustand. Benachbart zu den Seitenwänden 8, 15 sind Stoßdämpfer 11 vorgesehen, mittels derer die Haube 20 im geöffneten Zustand gehalten werden kann.

Mit dem Bezugszeichen 7 ist ein Kasten bezeichnet, in dem sich die Steuerung für die Vorrichtung befindet. Dies ist nicht zwingend notwendig. Die Steuerung kann auch außerhalb der Vorrichtung angeordnet sein. Diese kann auch unmittelbar bspw. in einem Melksystem bzw. in der Steuerung des Melksystems integriert sein.

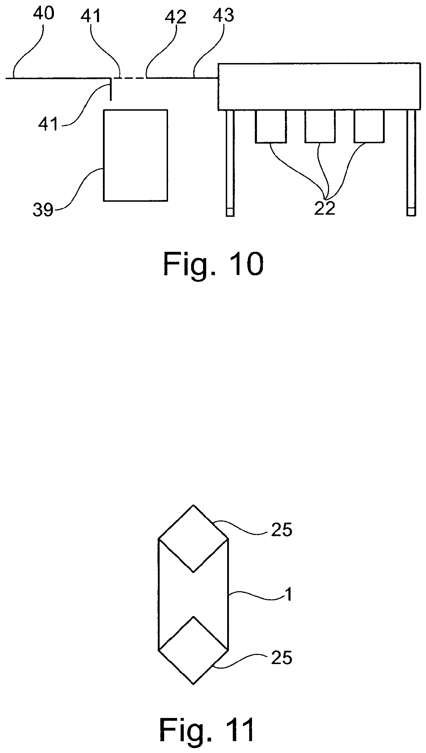

Parallel zu der Rückwand 24 ist eine Führungseinheit 2 ausgebildet Die Führungseinheit 2 ist gebildet durch zwei Führungsschienen 25, als im Wesentlichen rechteckförmige Profile ausgebildet sind, wie sie in der Fig. 11 dargestellt sind. Zwischen den Führungsschienen 25 ist ein beweglicher Schlitten 1 angeordnet. Der bewegliche Schlitten 1 ist so zu einem Behälter 22 positionierbar, dass Milch in den Behälter 22 fließen kann. Der Schlitten 1 weist ein Auslassrohr 26 auf, welches nach unten hin gerichtet ist. Aus Fig. 1 ist ersichtlich, dass das Auslassrohr 26 über dem Durchlass 23 der Abdeckplatte 12 positioniert ist, so dass separierbare Milch durch das Auslassrohr 26 und den Durchlass 23 in den Behälter 22 fließt. Nicht dargestellt ist die Verbindung des Auslassrohrs 26 mit dem Melksystem. Zur Verbindung ist eine wenigstens abschnittsweise flexible ausgebildete Leitung vorgesehen. Die Leitung bewegt sich mit dem Schlitten 1 entlang der Führungseinheit 2 bzw. den Führungsschienen 25.

In dem dargestellten Ausführungsbeispiel ist aus Fig. 2 ersichtlich, dass links vom Behälter 22 ein Rohr 13 vorgesehen ist, das einen Anschluss 14 aufweist. Das Rohr 13 kann über den Anschluss 14 bspw. mit einem Abfluss verbunden werden. Es besteht daher die Möglichkeit, das Auslassrohr 26 über die nicht dargestellte Öffnung des Rohrs 13 zu positionieren und Milch nicht in die Behälter 22 sondern direkt bspw. in einen Tank für nicht verwertbare Milch oder unmittelbar in einen Abfluss abzuleiten. Während eines Reinigungsprozesses kann der Schlitten 1 mit dem Auslassrohr 26 über der Öffnung des Rohres 13 positioniert werden, so dass das Reinigungsmittel, insbesondere Reinigungswasser über das Rohr 13 abgeleitet wird.

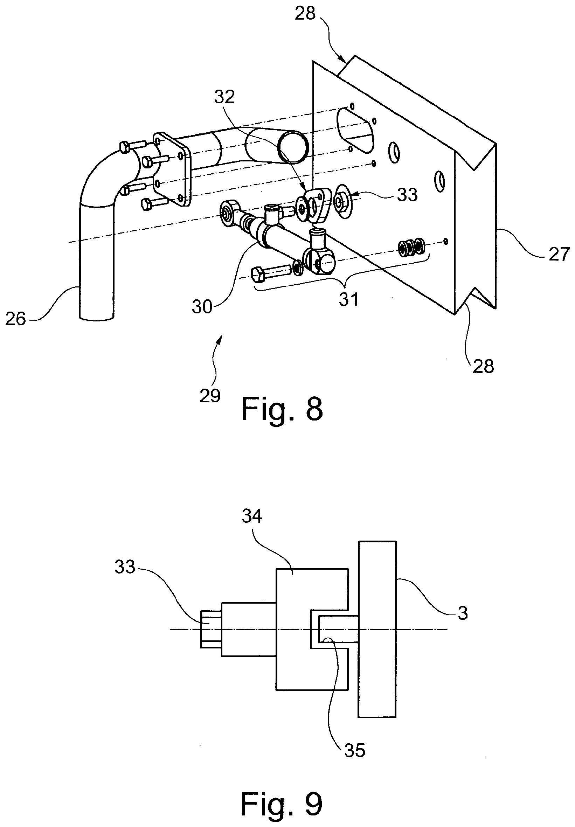

Der Schlitten 1 ist in Fig. 8 dargestellt. Der Schlitten 1 weist einen Grundkörper 27 auf. Die parallelen Längsflächen des Grundkörpers 27 weisen V-förmige Nuten 28 auf. Durch den Grundkörper 27 und mit diesem verbunden ist ein Auslassrohr 26. Das eine Ende des Auslassrohrs 26 ist über einen Behälter 22 positionierbar. Das andere Ende des Auslassrohrs ist mit einer nicht dargestellten flexiblen Leitung verbunden.

Mit dem Bezugszeichen 29 ist eine Verriegelungseinheit bezeichnet. Die Verriegelungseinheit 29 umfasst eine Zylinder-Kolben-Einheit 30. Die Zylinder-Kolben-Einheit 30 ist über eine Schraubverbindung 31 an dem Grundkörper 27 festgelegt. Die Kolbenstange der Zylinder-Kolben-Einheit 30 ist mit einem Hebel 32 verbunden. Der Hebel 32 ist mit einem Zapfen 33 verbunden, der sich durch den Grundkörper 27 hindurch erstreckt. Wird die Kolbenstange ausgefahren bzw. eingefahren, so wird der Zapfen 33 verschwenkt. Der Zapfen 33 ist mit einer Klaue 34 verbunden, die in Fig. 9 dargestellt ist. Die Klaue 34 umgreift einen Bolzen 35, der an einer Stange 3 befestigt ist. In dem dargestellten Ausführungsbeispiel nach Fig. 2 weist die Stange 3 drei äquidistant zueinander angeordnete Bolzen 35 auf. Die Stange 3 ist mit einer Antriebseinheit 17 verbunden. Bei der Antriebseinheit 17 handelt es sich um eine Zylinder-Kolben-Einheit.

Fig. 4 zeigt die Antriebseinheit 17 und deren Kopplung an die Stange 3. Das eine Ende der Zylinder-Kolben-Einheit der Antriebseinheit 17 ist an einem Festpunkt 4 mit dem Gestell 18 verbunden. Ein beweglicher Anschlusspunkt 5 ist mit der Stange 3 verbunden. Fig. 4 zeigt eine Betriebsposition, in der die Kolbenstange der Antriebseinheit 17 eingefahren ist. Wird die Kolbenstange ausgefahren, so nimmt der Anschlusspunkt 5 eine zweite Endposition ein, wobei die Stange 3 nach links in Richtung der Seitenwand 8 bewegt wird. Die Stange 3 ist zwischen diesen beiden Positionen hin- und herbewegbar.

Fig. 5 zeigt eine Position des Schlittens 1 in einer Ausgangsposition, das heißt außerhalb der Behälter 22. Das Auslassrohr 26 mündet über dem Rohr 13, so dass bspw. Milch, die nicht in die Behälter 22 gelangen soll, dort abgeleitet werden kann. In dieser Position kann auch eine Reinigung des milchführenden Systems erfolgen und das Reinigungsmittel über das Rohr 13 abgeleitet werden.

Der Schlitten 27 ist über die Klaue 34 und einen Bolzen 35 mit der Stange 3 verbunden. Wird die Klaue 34 verschwenkt, so kommt es zu einer Verriegelung zwischen dem Bolzen 35 und der Klaue 34, so dass eine formschlüssige Verbindung zwischen dem Schlitten 1 und der Stange 3 vorliegt. Nimmt die Antriebseinheit 17 die in Fig. 4 dargestellte Position ein, so wird der Schlitten 1 in die in Fig. 2 dargestellte Position verfahren, so dass das Auslassrohr 26 über dem Behälter 22 positioniert wird. Es kann ein Melkvorgang erfolgen. Soll die ermolkene Milch aufgefangen werden, so fließt diese Milch in den Behälter 22.

Zum Verfahren des Schlittens 1 aus der in Fig. 2 dargestellten Position in eine nächste Position, so dass das Auslassrohr 26 über den mittleren Behälter 22 positioniert wird, wird die Verriegelungseinrichtung 29 betätigt. Es kommt zu einer Entkopplung der Klaue 24 vom Bolzen 35. Die Antriebseinheit 17 wird betätigt. Die Stange 3 wird nach links in Richtung der Seitenwand 8 bewegt. Ein weiterer Bolzen 35 kommt in den Bereich der Klaue 34. Die Verriegelungseinrichtung 29 wird betätigt. Durch Verschwenken der Klaue 34 kommt es zu einer formschlüssigen Verbindung zwischen dem zweiten Bolzen 35 der Stange 3 und dem Schlitten 1. Wird die Antriebseinheit 17 betätigt und nimmt diese die in Fig. 4 dargestellte Position ein, so wird der Schlitten 1 nach rechts verschoben. Das Auslassrohr 26 nimmt eine Position oberhalb der Durchlassöffnung 23 und dem mittleren Behälter 22 ein. Ermolkene Milch kann in den mittleren Behälter 22 der Vorrichtung gelangen. Durch das Zusammenspiel zwischen der formschlüssigen Kopplung des Schlittens 1 mit der Stange 3 und die Betätigung der Antriebseinheit 17 kann der Schlitten 1 mit seinem Auslassrohr 26 über dem Behälter, der benachbart zur Seitenwand 15 ist, positioniert werden. Durch Kopplung und Entkopplung des Schlittens 1 mit der Stange 3 kann der Schlitten 1 sequentiell in seine Ausgangsposition überführt werden in seine.

Fig. 6 zeigt eine bevorzugte Ausgestaltung der Vorrichtung zur Aufnahme separierter Milch. Diese Vorrichtung weist eine Vorrichtung gemäß Fig. 1 auf, die um ein Modul 36 erweitert ist. Das Modul 36 entspricht konstruktiv im Wesentlichen der Vorrichtung nach Fig. 1, wobei das Modul 36 passiv ist, das heißt es weist keine Antriebseinheit auf. Das Modul 36 umfasst eine Modulführungseinheit 37, die entsprechend der Führungseinheit 2 ausgebildet. Sie weist zwei Führungsschienen 38, die mit den Führungsschienen 25 verbunden sind. Die Führungsschienen 25 sind vorzugsweise als Profile ausgebildet. Zur Verbindung der Vorrichtung nach Fig. 1 mit dem Modul 36 wird die Seitenwand 15 entfernt. Des Weiteren wird die Stange 3 mit einer Verlängerungsstange verbunden, so dass der Schlitten 1 auch über den jeweiligen Behälter 22 des Moduls 36 positionierbar ist.

Fig. 7 zeigt eine Vorrichtung, die um drei Module 36 erweitert ist. Durch den modulartigen Aufbau der Vorrichtung besteht die Möglichkeit, eine Anzahl von Behältern 22 bereitzustellen, die an die Herdengröße angepasst ist.

In der Steuerung der Vorrichtung wird hinterleget, wie viele Module und mit wie vielen Behältern vorgesehen sind, so dass ein maximaler Verfahrweg des Schlittens definiert ist. Es besteht auch die Möglichkeit am Ende der Führungseinheit einen Schalter vorzusehen, mittels dessen ein Signal an die Steuerung abgegeben wird, dass der Schlitten den letzten Behälter 22 in einer Reihe von Behältern 22 des wenigstens einen Moduls 36 erreicht hat.

Ein Melksystem oder eine Melkeinrichtung weist vorzugsweise ein Identifikationsmittel, mittels dessen die Identität des zu melkenden Tiers festgestellt wird, auf. Im Herdenmanagementsystem sind zu jedem Tier Daten hinterlegt. Betritt das Tier bspw. einen Melkroboter, so kann es vor dem Betreten des Melkroboters oder im Melkroboter identifiziert werden. Es werden Informationen bereitgestellt. In Abhängigkeit davon, ob die Milch des sich im Melkroboter befindenden Tiers verworfen oder verwertet werden soll, wird die Milch entsprechend geleitet. Handelt es bei dem Tier bspw. um eine Kuh, die frisch gekalbt hat, wird die Milch ermolken und der Vorrichtung zur Aufnahme der separierten Milch zugeleitet. Hierbei fließt die Milch über eine nicht dargestellte Leitung zu dem Auslassrohr 26 und aus diesem in einen Behälter 22. Ist bekannt, welche Position der Schlitten eingenommen hat, so ist eine Zuordnung des Behälters zu der Milch eines Muttertiers möglich ist.

Ist ein Melkvorgang beendet, so wird der Schlitten vorzugsweise zum nächsten Behälter verfahren. Dieser steht bereit, um die separierte Milch eines anderen Tiers aufzufangen. Bevor der Schlitten zum nächsten Behälter verfahren wird, wird vorzugsweise das Leitungssystem mittels Druckluft freigeblasen, so dass keine Milch des vorhergehenden Tiers mit der Milch des aktuellen Tiers vermischt wird.

Es besteht auch die Möglichkeit, dass in Abhängigkeit von der Menge der Milch, die in den Behälter eingeleitet wird, auch Milch von zwei oder mehreren Tieren vermischt wird, wenn keine individualisierte Milch bereitgestellt werden soll. Bevorzugt ist dabei eine Ausgestaltung, bei der eine Sensorik vorgesehen ist, mittels derer ermittelt wird, ob ein Behälter da ist und ob der Behälter eine bestimmte Gewichtskraft erreicht hat, aus der geschlossen werden kann, ob dieser bereits voll ist oder nicht. Bei der Sensorik kann es sich bspw. um druckempfindliche Halter handeln. Insbesondere kann es sich hierbei um eine Dehnungsmesstreifen handeln, der entsprechende Signale liefert.

Zum Reinigen der Vorrichtung insbesondere der milchführenden Bauteile wird der Schlitten 1 über die Öffnung des Rohrs 13 geführt. Von dort aus wird das Reinigungsmittel abgeleitet.

Zur Aufzucht von Jungtieren, die nicht zwingend mutterindividualiserte Milch erhalten müssen, ist einer Vorrichtung zur Aufnahme separierter Milch umfassend ein Gestell und wenigstens zwei Behälter vorzugsweise ein Auffangbehälter 39 vorgeschaltet, wie dies in Fig. 10 dargestellt ist. Über eine Zuleitung 40 wird Milch einem verschwenkbaren Leitungsabschnitt 41, der mit der Zuleitung 40 verbunden ist, zugeleitet. Der Leitungsabschnitt 41 weist einen Auslass auf, der in Richtung des Behälters 39 positioniert ist. In dieser Position, wie in Fig. 10 dargestellt ist, fließt die Milch in den Auffangbehälter 39. Der Leitungsabschnitt 41 ist verschwenkbar. In der gestrichelt dargestellten Position nach Fig. 10 ist der Leitungsabschnitt 41 mit dem Zulauf 42 der Leitung 43 flüssigkeitsdicht verbunden. Fließt nunmehr Milch durch die Zuleitung 40, fließt diese über den Leitungsabschnitt 41 in die Leitung 43 und von dort aus in das Auslassrohr 26 in einen Behälter 22 der Vorrichtung zur Aufnahme separierter Milch. Die Vorrichtung zur separierter Milch, wie sie in Fig. 10 dargestellt ist, kann um eine entsprechende Anzahl von Modulen 36 erweitert werden.

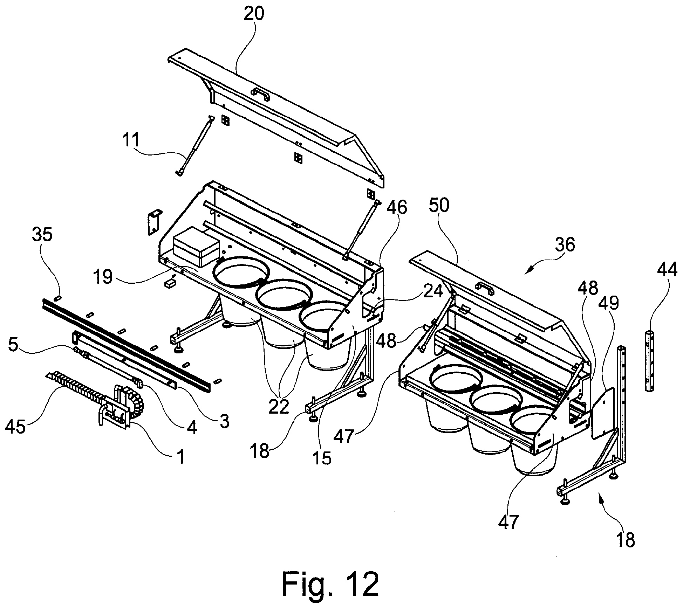

Fig. 12 zeigt ein weiteres Ausführungsbeispiel einer Vorrichtung zur Aufnahme separierter Milch in einer perspektivischer Ansicht. Die Vorrichtung weist ein Gestell 18 auf. Das Gestell 18 ist im Wesentlichen L-förmig ausbildet. Ein Schenkel 44 des Gestells 18 ist mit einer Rückwand 24 lösbar verbindbar. Alternativ kann die Rückwand 24 statt mit dem L-förmigen Gestell mit einem Schenkel 44 verbunden werden. Der Schenkel 44 dient zur Festlegung der Vorrichtung zum Beispiel an einer Tragstruktur, bei der es sich um eine Wand handeln kann. An der Rückwand 24 können mehrere Schenkel 44 vorgesehen sein. In einer Grundplatte 19 sind Öffnungen vorgesehen, durch die sich teilweise Behälter 22 hindurch erstrecken. In dem dargestellten Ausführungsbeispiel handelt es sich bei den Behältern 22 um Eimer, die im Öffnungsbereich einen Rand aufweisen, der auf der Grundplatte 19 aufliegt.

Der prinzipielle Aufbau der Vorrichtung nach Fig. 12 entspricht der Vorrichtung nach Fig. 1. Zusätzlich ist in der Fig. 12 eine Energieführungskette 45 dargestellt. Die Energieführungskette 45 weist ein ortsfestes Ende auf, welches mit der Grundplatte 19 verbunden ist.

Das bewegliche Ende der Energieführungskette 45 ist mit dem Schlitten 1 verbunden. In der Energieführungskette 45 werden Leitungen, Schläuche und dergleichen zu dem am Schlitten 1 angeordneten Verbrauchern geführt. Der Energieführungskette 45 wird auch eine Nichtleitung, die nicht dargestellt ist, geführt.

Aus der Darstellung in der Fig. 12 ist ersichtlich, dass in einer Seitenwand 15 des Grundmoduls eine Aussparung 46 vorgesehen ist. Mit dem in der Fig. 12 dargestellten Grundmodul kann ein Modul 36 verbunden werden. Die Seitenwände 47 des Moduls 36 weisen Aussparungen 48 auf, die mit Platten 49 abdeckbar sind. Aus der Darstellung nach Fig. 12 ist ersichtlich, dass das Modul 36 einen Deckel 50 aufweist.

Das Grundmodul kann um mehrere Module 36 erweitert werden. Die linke Seitenwand 47 wird von der Platte 49 befreit, so dass eine Verbindung der Führungsschienen 25 zwischen dem Grundmodul und dem Modul 36 hergestellt wird. Auf den Schienen 25 wird der Schlitten 1 geführt. Soll noch ein weiteres Modul vorgesehen sein, so wird dieses mit der rechten Seitenwand 47 des Moduls 36 verbunden. Es werden die entsprechenden Abdeckungen 49 an dem Modul oder den Modulen entfernt.

Es versteht sich, dass auch mehrere Module 36 zwischen zwei Grundmodulen angeordnet sein können. Grundmodule und Module können in einer geeigneten Weise miteinander kombiniert werden.

### Bezugszeichenliste

- 1: Schlitten
- 2: Führungseinheit
- 3: Stange
- 4: Festpunkt
- 5: beweglicher Anschlusspunkt
- 6: Abstandhalter
- 7: Steuerkasten
- 8: Seitenwand
- 9: Griff
- 10: Scharnier
- 11: Stoßdämpfer
- 12: Abdeckplatte
- 13: Rohr
- 14: Anschluss
- 15: Seitenwand
- 16: Schrauben
- 17: Kolben-Zylinder-Einheit (Antriebseinheit)
- 18: Gestell
- 19: Grundplatte
- 20: Haube
- 21: Öffnung
- 22: Behälter
- 23: Durchlass
- 24: Rückwand
- 25: Führungsschiene
- 26: Auslassrohr
- 27: Grundkörper
- 28: Nut
- 29: Verriegelungseinheit
- 30: Zylinder-Kolben-Einheit
- 31: Schraubverbindung
- 32: Hebel
- 33: Zapfen
- 34: Klaue
- 35: Bolzen
- 36: Modul
- 37: Modul-Führungseinheit
- 38: Führungsschiene
- 39: Auffangbehälter
- 40: Zuleitung
- 41: Leitungsabschnitt
- 42: Zulauf
- 43: Leitung
- 44: Schenkel
- 45: Energieführungskette
- 46: Aussparung
- 47: Seitenwand
- 48: Aussparung
- 49: Platte
- 50: Deckel

## Patentansprüche

1. Vorrichtung zur Aufnahme separierter Milch umfassend ein Gestell (18),
wenigstens zwei Behälter (22),
eine wenigstens abschnittsweise flexible Leitung,
einen beweglichen Schlitten (1), der mit der Leitung verbunden ist und eine Antriebseinrichtung mittels derer der Schlitten (1) bewegbar und so zu einem Behälter (22) positionierbar ist, dass Milch in den Behälter (22) fließen kann, eine Führungseinheit (2) entlang derer der Schlitten (1) geführt wird, **dadurch gekennzeichnet, dass** die Antriebseinrichtung eine Antriebseinheit (17) aufweist, die mit einer Stange (3) verbunden ist, die zwischen zwei Endpositionen durch die Antriebseinheit bewegbar ist, und dass die Stange (3) mit dem Schlitten (1) lösbar verbindbar ist.

2. Vorrichtung nach Anspruch 1, **gekennzeichnet durch** ein Modul (36) umfassend ein Modulgestell, wenigstens einen Behälter (22) und eine Modul-Führungseinheit (37), wobei ein Endabschnitt der Modul-Führungseinheit (37) mit einem Endabschnitt der Führungseinheit (2) verbindbar ist.

3. Vorrichtung nach Anspruch 2, **dadurch gekennzeichnet, dass** die Modul-Führungseinheit (37) mit einer Modul-Führungseinheit eines weiteren Moduls (36) verbindbar ist.

4. Vorrichtung nach Anspruch 1, 2 oder 3, **dadurch gekennzeichnet, dass** ein Endabschnitt einer Modul-Führungseinheit (37) in einen Endabschnitt einer Modul-Führungseinheit (37) eines weiteren Moduls (36) oder in einen Endabschnitt der Führungseinheit (2) einsteckbar ist.

5. Vorrichtung nach einem der Ansprüche 1 bis 4, **dadurch gekennzeichnet, dass** die Führungseinheit (2) und ggf. die Modul-Führungseinheit (37) durch zwei beabstandet zueinander parallele Führungsschienen (25) gebildet und der Schlitten (1) gleitend zwischen den Führungsschienen (25) geführt ist.

6. Vorrichtung nach Anspruch 5, **dadurch gekennzeichnet, dass** der Schlitten (1) mit wenigstens einer Führungsschiene (25) formschlüssig verbunden ist.

7. Vorrichtung nach einem der Ansprüche 1 bis 6, **dadurch gekennzeichnet, dass** die Antriebseinheit (17) wenigstens eine Zylinder-Kolbeneinheit umfasst.

8. Vorrichtung nach einem der Ansprüche 1 bis 6, **dadurch gekennzeichnet, dass** die Antriebseinheit ein Elektromotor ist, der ein Zahnrad antreibt, welches in eine an der Stange vorgesehene Verzahnung eingreift.

9. Vorrichtung nach Anspruch 8, **dadurch gekennzeichnet, dass** Antriebseinheit ein Elektromotor ist, der ein mit der der Stange verbundenen Riementrieb antreibt.

10. Vorrichtung nach Anspruch 7, 8 oder 9, **dadurch gekennzeichnet, dass** an den jeweiligen Endpositionen der Stange (3) Schalter vorgesehen sind, mittels derer die Antriebseinheit schaltbar ist.

11. Vorrichtung nach einem der Ansprüche 1 bis 10, **dadurch gekennzeichnet, dass** wenigstens einem Behälter (22) ein Sensor zugeordnet ist, der ein Signal liefert, ob der Behälter (22) vorhanden oder entnommen ist.

12. Vorrichtung nach einem der Ansprüche 1 bis 11, **dadurch gekennzeichnet, dass** ein Sensor das Gewicht des Behälters misst.

13. Vorrichtung nach einem der Ansprüche 1 bis 12, **dadurch gekennzeichnet, dass** der Schlitten (1) eine Verriegelungseinheit (29) aufweist.

14. Vorrichtung nach Anspruch 13, **dadurch gekennzeichnet, dass** die Verriegelungseinheit (29) pneumatisch oder elektromagnetisch betättigbar ist.

15. Vorrichtung nach Anspruch 13 oder 14, **dadurch gekennzeichnet, dass** die Verriegelungseinheit (29) eine verschwenkbare Klaue (34) aufweist.

16. Vorrichtung zur Aufnahme separierter Milch umfassend ein Gestell (18) und wenigstens zwei Behälter (22), die zu Aufnahme der Milch bestimmt und geeignet sind, nach einem der Ansprüche 1 bis 15, **dadurch gekennzeichnet, dass** ein verschwenkbarer Leitungsabschnitt (41) vorgesehen ist, der mit einer Zuleitung (40) verbunden und der Auslass des Leitungsabschnittes (41) in einer ersten Position zu einem Auffangbehälter (39) gerichtet und in einer zweiten Position mit dem Zulauf (42) der Leitung (43) verbindbar ist.

17. Vorrichtung nach Anspruch 16, **dadurch gekennzeichnet, dass** der Leitungsabschnitt (41) mittels einer Zylinder-Kolbeneinheit verschwenkbar ist.

## Claims

1. Device for collecting separated milk, comprising
a frame (18),
at least two containers (22),
a line which is flexible at least in sections,
a movable slide (1) which is connected to the line,
and a drive installation by means of which the slide (1) is movable and is positionable with respect to a container (22) in such a manner that milk can flow into the container (22), a guide unit (2) along which the slide (1) is guided, **characterized in that** the drive installation has a drive unit (17) which is connected to a rod (3) which is movable by the drive unit between two end positions, and **in that** the rod (3) is releasably connectable to the slide (1).

2. Device according to Claim 1, **characterized by** a module (36) comprising a module frame, at least one container (22) and a module guide unit (37), wherein an end portion of the module guide unit (37) is connectable to an end portion of the guide unit (2).

3. Device according to Claim 2, **characterized in that** the module guide unit (37) is connectable to a module guide unit of a further module (36).

4. Device according to Claim 1, 2 or 3, **characterized in that** an end portion of a module guide unit (37) is insertable into an end portion of a module guide unit (37) of a further module (36) or into an end portion of the guide unit (2).

5. Device according to one of Claims 1 to 4, **characterized in that** the guide unit (2) and optionally the module guide unit (37) are formed by two guide rails (25) which are parallel at a distance from each other, and the slide (1) is guided in a sliding manner between the guide rails (25).

6. Device according to Claim 5, **characterized in that** the slide (1) is connected in a form-fitting manner to at least one guide rail (25).

7. Device according to one of Claims 1 to 6, **characterized in that** the drive unit (17) comprises at least one cylinder-piston unit.

8. Device according to one of Claims 1 to 6, **characterized in that** the drive unit is an electric motor which drives a gearwheel which engages in a toothing provided at the rod.

9. Device according to Claim 8, **characterized in that** drive unit is an electric motor which drives a belt drive connected to the rod.

10. Device according to Claim 7, 8 or 9, **characterized in that** switches by means of which the drive unit is switchable are provided at the respective end positions of the rod (3).

11. Device according to one of Claims 1 to 10, **characterized in that** at least one container (22) is assigned a sensor which supplies a signal as to whether the container (22) is present or has been removed.

12. Device according to one of Claims 1 to 11, **characterized in that** a sensor measures the weight of the container.

13. Device according to one of Claims 1 to 12, **characterized in that** the slide (1) has a locking unit (29).

14. Device according to Claim 13, **characterized in that** the locking unit (29) is actuable pneumatically or electromagnetically.

15. Device according to Claim 13 or 14, **characterized in that** the locking unit (29) has a pivotable claw (34).

16. Device for collecting separated milk, comprising a frame (18) and at least two containers (22) which are intended and are suitable for collecting the milk, according to one of Claims 1 to 15, **characterized in that** a pivotable line portion (41) is provided which is connected to a supply line (40), and the outlet of the line portion (41) is directed in a first position to a collecting container (39) and is connectable in a second position to the inlet (42) of the line (43).

17. Device according to Claim 16, **characterized in that** the line portion (41) is pivotable by means of a cylinder-piston unit.

## Revendications

1. Dispositif pour recevoir du lait séparé, comprenant un bâti (18),
au moins deux récipients (22),
une conduite au moins partiellement flexible,
un chariot mobile (1) qui est connecté à la conduite et un dispositif d'entraînement au moyen duquel le chariot (1) peut être déplacé et peut ainsi être positionné par rapport à un récipient (22) de telle sorte que du lait puisse s'écouler dans le récipient (22),
une unité de guidage (2) le long de laquelle le chariot (1) est guidé, **caractérisé en ce que**
le dispositif d'entraînement présente une unité d'entraînement (17) qui est connectée à une tige (3) qui peut être déplacée entre deux positions d'extrémité par l'unité d'entraînement, et **en ce que** la tige (3) peut être connectée de manière amovible au chariot (1).

2. Dispositif selon la revendication 1, **caractérisé par** un module (36) comprenant un bâti de module, au moins un récipient (22) et une unité de guidage de module (37), une portion d'extrémité de l'unité de guidage de module (37) pouvant être connectée à une portion d'extrémité de l'unité de guidage (2).

3. Dispositif selon la revendication 2, **caractérisé en ce que** l'unité de guidage de module (37) peut être connectée à une unité de guidage de module d'un module supplémentaire (36).

4. Dispositif selon la revendication 1, 2 ou 3, **caractérisé en ce qu'**une portion d'extrémité d'une unité de guidage de module (37) peut être enfichée dans une portion d'extrémité d'une unité de guidage de module (37) d'un module supplémentaire (36) ou dans une portion d'extrémité de l'unité de guidage (2).

5. Dispositif selon l'une quelconque des revendications 1 à 4, **caractérisé en ce que** l'unité de guidage (2) et éventuellement l'unité de guidage de module (37) sont formées par deux rails de guidage parallèles (25) espacés l'un de l'autre et le chariot (1) est guidé de manière coulissante entre les rails de guidage (25).

6. Dispositif selon la revendication 5, **caractérisé en ce que** le chariot (1) est connecté par engagement par correspondance de formes à au moins un rail de guidage (25).

7. Dispositif selon l'une quelconque des revendications 1 à 6, **caractérisé en ce que** l'unité d'entraînement (17) comprend au moins une unité cylindre-piston.

8. Dispositif selon l'une quelconque des revendications 1 à 6, **caractérisé en ce que** l'unité d'entraînement est un moteur électrique qui entraîne une roue dentée qui s'engage dans une denture prévue sur la tige.

9. Dispositif selon la revendication 8, **caractérisé en ce que** l'unité d'entraînement est un moteur électrique qui entraîne un entraînement à courroie connecté à la tige.

10. Dispositif selon la revendication 7, 8 ou 9, **caractérisé en ce qu'**au niveau des positions d'extrémité respectives de la tige (3) sont prévus des commutateurs au moyen desquels l'unité d'entraînement peut être commutée.

11. Dispositif selon l'une quelconque des revendications 1 à 10, **caractérisé en ce qu'**un capteur est associé à au moins un récipient (22), lequel capteur fournit un signal indiquant si le récipient (22) est présent ou enlevé.

12. Dispositif selon l'une quelconque des revendications 1 à 11, **caractérisé en ce qu'**un capteur mesure le poids du récipient.

13. Dispositif selon l'une quelconque des revendications 1 à 12, **caractérisé en ce que** le chariot (1) présente une unité de verrouillage (29).

14. Dispositif selon la revendication 13, **caractérisé en ce que** l'unité de verrouillage (29) peut être commandée de manière pneumatique ou électromagnétique.

15. Dispositif selon la revendication 13 ou 14, **caractérisé en ce que** l'unité de verrouillage (29) présente une griffe pivotante (34).

16. Dispositif pour recevoir du lait séparé, comprenant un bâti (18) et au moins deux récipients (22) qui sont prévus et adaptés pour recevoir le lait, selon l'une quelconque des revendications 1 à 15, **caractérisé en ce qu'**une portion de conduite pivotante (41) est prévue, laquelle est connectée à une conduite d'alimentation (40) et la sortie de la portion de conduite (41) est orientée dans une première position vers un récipient de collecte (39) et dans une deuxième position peut être connectée à l'alimentation (42) de la conduite (43).

17. Dispositif selon la revendication 16, **caractérisé en ce que** la portion de conduite (41) peut pivoter au moyen d'une unité cylindre-piston.
